# FASCICULE DE BREVET EUROPEEN

(11) **EP 0 943 135 B1**
(45) Date de publication et mention de la délivrance du brevet: **17.10.2001**
(21) Numéro de dépôt: 97910487.4
(22) Date de dépôt: 15.10.1997
(51) Int. Cl.: G07F 7/10

(54) **PROCEDE DE GESTION DE DEFAUTS D'INTEGRITE DE DONNEES DANS UNE MEMOIRE REINSCRIPTIBLE**
VERFAHREN ZUR BEARBEITUNG VON DATENINTEGRITÄTSFEHLERN BEI WIEDERBESCHREIBAREN SPEICHERN
METHOD FOR MANAGING DATA INTEGRITY FAULTS IN A RE-WRITEABLE MEMORY

(30) Priorité: 23.10.1996 FR 9613024
(43) Date de publication de la demande: 22.09.1999
(73) Titulaire: SCHLUMBERGER Systèmes, 92120 Montrouge (FR)
(72) Inventeur: GERBAULT, Eric, F-94270 Le Kremlin Bicêtre (FR); FRANCHI, Olivier, F-92130 Issy les Moulineaux (FR); GAMBIN, Jean-Marc, F-78920 Ecquevilly (FR)
(86) Numéro de dépôt international: FR9701842
(87) Numéro de publication internationale: WO9818108

(56) Documents cités:
- EP-A- 0 724 238
- EP-A- 0 727 785
- FR-A- 2 473 755
- US-A- 4 837 744

## Description

La présente invention concerne un procédé de gestion de défauts d'intégrité de données inscrites dans une mémoire réinscriptible d'un composant électronique.

L'invention trouve une application particulièrement avantageuse dans le domaine de la sécurisation des transactions électroniques réalisées entre un composant électronique d'une carte, dite à mémoire électronique, et un terminal relié à un émetteur géré par un opérateur : groupement de cartes bancaires ou autres.

Dans ce cas, le composant électronique de la carte effectue des opérations, effacement et/ou écriture par exemple, susceptibles d'affecter les données inscrites dans la mémoire réinscriptible, et échange des informations concernant les opérations effectuées, soit directement avec le terminal dans un mode de fonctionnement hors-ligne, soit avec l'émetteur par l'intermédiaire du terminal dans un mode de fonctionnement en-ligne. Le choix de l'un ou l'autre des modes de fonctionnement se fait à partir de critères établis à l'avance, on sait par exemple que si le montant de la transaction est inférieur à un certain seuil la communication se fait hors-ligne, alors qu'au-delà de ce seuil la transaction est effectuée obligatoirement en-ligne, l'autorisation de l'émetteur étant nécessaire dans ce cas.

D'une manière générale, les cartes à mémoire électronique utilisées pour effectuer des transactions électroniques, du type débit/crédit par exemple, comprennent des mémoires EEPROM ou flash EPROM qui ont le double avantage d'être non volatiles et électriquement effaçables, donc réinscriptibles. En revanche, elles ne peuvent être reprogrammées qu'un nombre limité de fois et leur temps de programmation est long.

Dans certaines applications, il arrive que ces mémoires soient corrompues pour l'une ou l'autre des raisons suivantes :
- nombre de réinscriptions trop important, entrainant une usure des cellules-mémoire et un dysfonctionnement de la mémoire électronique
- programmation effectuée en un temps très court, entraînant une charge insuffisante des cellules-mémoire,
- interruption accidentelle de l'alimentation électrique en cours de programmation, entraînant le même effet, voire l'effacement des valeurs antérieures sans programmation de valeurs nouvelles.

Ce dernier risque est particulièrement important dans les applications telles que les cartes à mémoire électronique, où ladite mémoire est embarquée dans un objet dépendant d'une source d'alimentation extérieure dont il peut être séparé à tout moment.

Toutefois, on peut observer que ces causes de corruption entrainant des défauts d'intégrité des données inscrites dans la mémoire réinscriptible ne sont pas équivalentes. Le dysfonctionnement de la mémoire en raison de l'usure des cellules est définitif et irréversible, tandis que les défauts d'écriture dus notamment à un retrait intempestif de la carte hors du terminal ou à une chute de la tension d'alimentation du composant électronique sont des incidents ponctuels qui ne mettent pas en cause le fonctionnement général du système.

Le document EP-A-0 727 785 décrit un procédé de gestion de défauts d'intégrité de données inscrites dans une mémoire réinscriptible d'un composant électronique apte à effectuer des opérations susceptibles de modifier au moins une desdites données et à échanger des informations relatives auxdites opérations, soit hors-ligne directement avec un terminal, soit en-ligne avec un émetteur par l'intermédiaire dudit terminal, le procédé consistant à effectuer, à chaque opération, un contrôle d'intégrité d'au moins une donnée.

Aussi, le problème technique à résoudre par l'objet de la présente invention est de proposer un procédé de gestion de défauts d'intégrité de données inscrites dans une mémoire réinscriptible d'un composant électronique, ledit composant électronique étant apte à effectuer des opérations susceptibles de modifier au moins une desdites données et à échanger des informations relatives auxdites opérations, soit hors-ligne directement avec un terminal, soit en-ligne avec un émetteur par l'intermédiaire dudit terminal, procédé qui permettrait de distinguer entre des défauts d'intégrité dus à un dysfonctionnement de la mémoire électronique rendant le composant et la carte électroniques définitivement inutilisables et des défauts d'intégrité liés à des incidents affectant l'alimentation électrique du composant électronique sans que le fonctionnement général de la carte à mémoire électronique soit mis en cause.

La solution au problème technique posé consiste, selon la présente invention, en ce que ledit procédé consiste à :
- définir, d'une part, des données, dites principales, dont un défaut d'intégrité est représentatif d'un dysfonctionnement de la mémoire réinscriptible, et, d'autre part, des données, dites secondaires, dont un défaut d'intégrité est représentatif, soit d'un dysfonctionnement de la mémoire réinscriptible, soit d'une interruption d'alimentation du composant électronique,
- effectuer, à chaque opération, un contrôle d'intégrité d'au moins une donnée,
- interdire l'opération, si un contrôle d'intégrité d'au moins une donnée principale révèle un défaut d'intégrité,
- affecter à au moins une donnée secondaire une valeur par défaut imposant un échange en-ligne lors de l'opération suivante, si un contrôle d'intégrité de la donnée secondaire révèle un défaut d'intégrité.

Ainsi, lorsqu'un défaut d'intégrité est détecté sur une desdites données principales on en déduit immanquablement qu'il s'agit d'un dysfonctionnement irréversible de la mémoire réinscriptible due par exemple à l'usure des cellules-mémoire.

Ce défaut d'intégrité se présentera à chaque fois que l'utilisateur voudra effectuer une opération quelconque, avec comme même conséquence que ladite opération sera à nouveau interdite. Le propriétaire de la carte à mémoire électronique défectueuse, constatant que sa carte est devenue inutilisable, devra alors demander une autre carte auprès de l'organisme émetteur.

Par contre, si le défaut d'intégrité apparaît sur une donnée secondaire, il peut y avoir un doute sur l'origine dudit défaut. C'est pourquoi, plutôt que d'interdire définitivement l'opération, comme dans le cas d'un défaut d'intégrité sur une donnée principale, on préfère permettre à la carte à mémoire de pouvoir fonctionner à nouveau lors de l'opération suivante au cas où le défaut d'intégrité observé au cours de l'opération précédente était dû à un simple problème ponctuel d'alimentation, sans mettre en cause le fonctionnement normal de la carte. Par contre, si le défaut d'intégrité sur une donnée secondaire a pour origine l'usure des cellules de la mémoire réinscriptible, ou tout autre dysfonctionnement irrémédiable, l'étape d'affectation de la valeur par défaut, nécessitant une inscription dans la mémoire, ne pourrait être effectuée, se traduisant à la prochaine opération à nouveau par un défaut d'intégrité de la donnée secondaire, et ainsi de suite jusqu'à ce que l'utilisateur se rende compte que sa carte ne fonctionne pas et signale l'anomalie à l'organisme émetteur pour se voir attribuer une nouvelle carte.

A titre d'exemple, on peut citer comme données principales des données fixes relatives à l'identité de l'émetteur et/ou du détenteur de la carte comportant le composant électronique et la mémoire réinscriptible. Ces données sont inscrites dans une mémoire morte du composant et ne sont jamais soumises à modification lors des opérations successives effectuées par l'opérateur à l'aide de sa carte à mémoire électronique. Elles sont donc insensibles à toutes fluctuations dans l'alimentation électrique de la carte, notamment son retrait intempestif du terminal, et si un défaut d'intégrité est observé à leur égard, ce ne peut être que du fait d'un dysfonctionnement irréversible de la mémoire électronique, d'où la décision d'interdire toute opération ultérieure si un tel défaut d'intégrité se produit.

Il est également possible de prendre pour données principales des données variables protégées par un dispositif de sauvegarde contre les interruptions d'alimentation électrique du composant électronique. Il s'agit de données qui sont modifiées à chaque opération, et donc susceptibles d'être corrompues par un défaut dans l'alimentation du composant, mais qui, par ailleurs, bénéficiant d'un système de sauvegarde et de récupération tel qu'à tout moment on puisse avoir accès à la dernière valeur validée des données soumises à ce système.

Dans les cartes à mémoire électronique utilisées pour effectuer des transactions électroniques de débit/crédit, une donnée principale de ce type est fournie, par exemple, par le compteur des transactions qui s'incrémente de 1 à chaque opération. Ce compteur, de manière impérative, ne doit pas être perdu car il donnerait la possibilité au propriétaire de la carte de nier certaines transactions. C'est pourquoi, il est protégé par un dispositif de sauvegarde, tel que celui décrit dans la demande de brevet français n° 95/15186 (FR-A-2 742 893 publiée le 27.06.1997) au nom de la Demanderesse.

Dans ce cas, un défaut d'intégrité observé sur la valeur du compteur de transaction est révélateur d'un dysfonctionnement de la mémoire réinscriptible et non de l'alimentation électrique du composant électronique, il s'ensuit alors l'interdiction absolue d'effectuer toute nouvelle opération.

Les données secondaires peuvent être très diverses, on peut mentionner par exemple :
- un indicateur "en-ligne" constitué par un bit (0 ou 1) dans un fichier. Si le composant électronique décide d'établir une liaison en-ligne avec l'émetteur, par exemple si le montant d'une transaction dépasse une valeur donnée, alors l'indicateur "en-ligne" est mis à 1. Puis, on vérifie que la liaison en-ligne s'est bien effectuée, si c'est le cas, l'indicateur est remis à 0. Donc, si à la transaction suivante, l'indicateur "en-ligne" est à 1, c'est que la dernière transaction en-ligne ne s'est pas effectuée correctement.
- des indicateurs d'authentification de l'émetteur et/ou de la carte à mémoire électronique. Ce sont également des bits 0 ou 1 qui normalement prennent la valeur 0 si les authentifications ont bien été vérifiées, la valeur 1 révélant un problème d'authentification.
- la recopie du compteur de transactions après chaque opération en-ligne. La comparaison entre les valeurs du compteur de transactions et de sa recopie permet de prendre une décision d'effectuer une opération en-ligne.
   En effet, un écart trop grand entre ces valeurs indique que la dernière opération en-ligne est ancienne et donc que la prochaine opération devra être faite en-ligne de manière notamment à effectuer certaines vérifications d'intégrité.

Selon le procédé de l'invention, la procédure d'inscription d'une donnée quelconque dans la mémoire réinscriptible de composant électronique consiste à :
- inscrire la donnée dans la mémoire réinscriptible,
- vérifier la conformité de l'écriture,
- si l'écriture est conforme :
   * calculer une somme de contrôle, dite première somme de contrôle, à partir de la valeur de la donnée, inscrite dans la mémoire,
   * inscrire ladite somme de contrôle dans la mémoire réinscriptible,
- si l'écriture n'est pas conforme, arrêter l'opération en cours.

On comprend ainsi qu'à chaque opération, le calcul et l'inscription de la première somme de contrôle d'une donnée ne sont effectués qu'après inscription de la valeur de la donnée dans la mémoire réinscriptible et vérification de sa conformité. De cette manière, si un défaut d'intégrité s'est produit pendant l'inscription de la donnée, principale ou secondaire, et pour quelle que raison que ce soit, l'opération en cours est annulée. Par contre, si l'écriture de la donnée est conforme, ladite première somme de contrôle correspondant à la donnée est calculée et inscrite à son tour dans la mémoire réinscriptible. Si un défaut d'intégrité survient lors de l'écriture de la première somme de contrôle, celui-ci sera détecté lors de l'opération suivante puisque, selon l'invention, il est prévu de manière générale qu'un contrôle d'intégrité consiste, en début d'opération, à calculer une deuxième somme de contrôle de la donnée à partir de la valeur de ladite donnée présente dans la mémoire électronique réinscriptible, et à comparer ladite deuxième somme de contrôle à une première somme de contrôle, inscrite dans ladite mémoire lors de l'opération précédente.

Ainsi, la lecture d'une donnée quelconque dans la mémoire réinscriptible s'effectue de la façon suivante :
- lecture de la donnée dans ladite mémoire,
- calcul de ladite deuxième somme de contrôle,
- comparaison de la deuxième somme de contrôle avec la première somme de contrôle inscrite dans la mémoire lors de l'opération précédente,
- interdiction de poursuivre l'opération, si la comparaison négative révèle un défaut d'intégrité d'une donnée principale, car dans ce cas la comparaison négative a pour cause un dysfonctionnement de la mémoire,
- attribution d'une valeur par défaut à la donnée, si la comparaison négative révèle un défaut d'intégrité d'une donnée secondaire, ladite valeur par défaut imposant un échange en-ligne lors de l'opération suivante,
- poursuite de l'opération, si la comparaison est positive.

## Revendications

1. Procédé de gestion de défauts d'intégrité de données inscrites dans une mémoire réinscriptible d'un composant électronique, ledit composant électronique étant apte à effectuer des opérations susceptibles de modifier au moins une desdites données et à échanger des informations relatives auxdites opérations, soit hors-ligne directement avec un terminal, soit en-ligne avec un émetteur par l'intermédiaire dudit terminal, ledit procédé consistant à :
- définir, d'une part, des données, dites principales, dont un défaut d'intégrité est représentatif d'un dysfonctionnement de la mémoire réinscriptible, et, d'autre part, des données, dites secondaires, dont un défaut d'intégrité est représentatif, soit d'un dysfonctionnement de la mémoire réinscriptible, soit d'une interruption d'alimentation du composant électronique,
- effectuer, à chaque opération, un contrôle d'intégrité d'au moins une donnée,
- interdire l'opération, si un contrôle d'intégrité d'au moins une donnée principale révèle un défaut d'intégrité,
- affecter à au moins une donnée secondaire une valeur par défaut imposant un échange en-ligne lors de l'opération suivante, si un contrôle d'intégrité de la donnée secondaire révèle un défaut d'intégrité.

2. Procédé selon la revendication 1, **caractérisé en ce qu'**un contrôle d'intégrité consiste, en début d'opération, à calculer une deuxième somme de contrôle de la donnée à partir de la valeur de ladite donnée présente dans la mémoire électronique réinscriptible, et à comparer ladite deuxième somme de contrôle à une première somme de contrôle, inscrite dans ladite mémoire lors de l'opération précédente.

3. Procédé selon la revendication 2, **caractérisé en ce que**, à chaque opération, le calcul et l'inscription de la première somme de contrôle d'une donnée ne sont effectués qu'après inscription de la valeur de la donnée dans la mémoire réinscriptible et vérification de sa conformité.

4. Procédé selon l'une quelconque des revendications 1 à 3, **caractérisé en ce que** lesdites données principales comportent des données fixes relatives à l'identité de l'émetteur et/ou du détenteur du composant électronique.

5. Procédé selon l'une quelconque des revendications 1 à 4, **caractérisé en ce que** lesdites données principales comportent des données variables protégées par un dispositif de sauvegarde contre les interruptions d'alimentation électrique du composant électronique.

## Claims

1. A method of managing integrity defects concerning data written in a rewritable memory of an electronic component, said electronic component being suitable for performing operations that are capable of modifying at least one item of said data and of interchanging information relating to said operations either off-line, directly with a terminal, or else on-line, with an issuer via said terminal;
the method consisting in:
defining firstly "main" data in which an integrity defect is representative of faulty operation of the rewritable memory, and secondly "secondary" data in which an integrity defect is representative either of faulty operation of the rewritable memory, or else of an interruption in the power supply to the electronic component;
- on each operation, checking the integrity of at least one data item;
- if a check on the integrity of at least one item of the main data reveals an integrity defect, preventing any further operation; and
- if an integrity check on at least one item of the secondary data reveals an integrity defect, allocating a default value to said item of the secondary data, thereby requiring an interchange to be performed on-line during the following operation.

2. A method according to claim 1, wherein an integrity check consists, at the beginning of an operation, in calculating a second checksum relating to the data on the basis of the value of said data present in the rewritable electronic memory, and in comparing said second checksum with a first checksum written in said memory during the preceding operation.

3. A method according to claim 2, wherein, on each operation, the first checksum concerning data is calculated and written only after the value of the data has been written in the rewritable memory, and it has been verified for correctness.

4. A method according to any of claims 1 to 3, wherein said main data comprises fixed data relating to the identity of the issuer and/or of the holder of the electronic component.

5. A method according to any of claims 1 to 4, wherein said main data comprises variable data protected by a backup device for providing protection against interruptions in the power supply to the electronic component.

## Patentansprüche

1. Verfahren zur Verwaltung von Integrationsfehlern von in einen überschreibbaren Speicher einer elektronischen Komponente geschriebenen Daten, wobei besagte elektronische Komponente geeignet ist, Operationen durchzuführen, die geeignet sind, wenigstens eines der besagten Daten zu verändern und die mit diesen Operationen zusammenhängenden Informationen entweder Offline direkt mit einem Terminal oder Online mit einem Ausgeber mittels besagten Terminals auszutauschen, wobei besagtes Verfahren besteht aus:
- einerseits der Definition der sogenannten Hauptdaten, bei denen ein Integrationsfehler eine Funktionsstörung des überschreibbaren Speichers darstellt, und andererseits der sogenannten Nebendaten, bei denen ein Integrationsfehler entweder eine Funktionsstörung des überschreibbaren Speichers oder eine Unterbrechung der Versorgung der elektronischen Komponente darstellt,
- der Durchführung einer Integrationskontrolle wenigstens eines der Daten bei jeder Operation,
- dem Sperren der Operation, wenn eine Integrationskontrolle wenigstens eines der Hauptdaten einen Integrationsfehler feststellt,
- dem Zuordnen eines Ersatzwertes für wenigstens eines der Nebendaten, der einen Austausch Online bei der nachfolgenden Operation erzwingt, wenn eine Integrationskontrolle eines der Nebendaten einen Integrationsfehler feststellt.

2. Verfahren gemäß Anspruch 1, **dadurch gekennzeichnet, daß** eine Integrationskontrolle zu Beginn der Operation in der Berechnung einer zweiten Kontrollsumme der Daten, ausgehend vom Wert der besagten Daten besteht, die im überschreibbaren elektronischen Speicher vorhanden sind, und im Vergleich besagter zweiter Kontrollsumme mit einer ersten Kontrollsumme, die bei der vorherigen Operation in besagten Speicher geschrieben wurde.

3. Verfahren gemäß Anspruch 2, **dadurch gekennzeichnet, daß** die Berechnung und das Schreiben der ersten Kontrollsumme eines der Daten bei jeder Operation erst nach dem Schreiben des Wertes eines der Daten im überschreibbaren Speicher und der Überprüfung seiner Konformität erfolgen.

4. Verfahren gemäß Anspruch 1 bis 3, **dadurch gekennzeichnet, daß** besagte Hauptdaten feste Daten bezüglich der Identität des Ausgebers und / oder des Besitzers der elektronischen Komponente umfassen.

5. Verfahren gemäß Anspruch 1 bis 4, **dadurch gekennzeichnet, daß** besagte Hauptdaten variable Daten umfassen, die durch eine Sicherungsvorrichtung gegen Unterbrechungen der Stromversorgung der elektronischen Komponente geschützt sind.
